# EUROPEAN PATENT SPECIFICATION

(11) **EP 1 409 989 B1**
(45) Date of publication and mention of the grant of the patent: **28.04.2010**
(21) Application number: 02750027.1
(22) Date of filing: 12.07.2002
(51) Int. Cl.: B01L 3/00, G01N 15/14

(54) **METHOD FOR SEPARATING COMPONENTS OF A MIXTURE**
METHODE ZUR TRENNUNG VON KOMPONENTEN EINES GEMISCHES
PROCEDURE POUR SEPARER LES COMPOSANTES D'UN MELANGE

(30) Priority: 13.07.2001 US 305196 P
(43) Date of publication of application: 21.04.2004
(73) Proprietor: Caliper Life Sciences, Inc., Mountain View, CA 94043-2234 (US)
(72) Inventor: WADA, H. Garrett,, Atherton, CA 94027 (US); BOUSSE, Luc, J., Los Altos, CA 94022 (US); CHOW, Andrea, W., Los Altos, CA 94024 (US)
(74) Representative: Kiddle, Simon John
(86) International application number: PCT/US2002/022318
(87) International publication number: WO 2003/006133

(56) References cited:
- WO-A-98/10267
- WO-A-99/61888
- WO-A2-02/44689
- US-A- 5 587 128
- US-A- 5 635 358
- US-A- 5 726 404
- US-A- 5 928 880
- US-B1- 6 184 029

## Description

### BACKGROUND OF THE INVENTION

Recent advances in microfluidic technology have resulted in wide spread use of these devices for varied applications. For example, microfluidic devices are used for high throughput screening of various test compounds to identify potential candidates for drug discovery. Pioneering microfluidic methods for performing biological assays in microfluidic systems have also been developed, such as those described by Parce et al., "High Throughput Screening Assay Systems in Microscale Fluidic Devices" U.S. 5,942,443 and Knapp et al., "Closed Loop Biochemical Analyzers" (WO 98/45481).

Many aspects of drug discovery research rely upon the ability to perform extremely large numbers of chemical and biochemical analyses. Miniaturization of the research laboratory procedures offers several advantages over conventional systems including reduced consumption of expensive reagents (typically on the order of nanoliters), speedier results, efficient use of manpower as well as increased throughput.
U.S. 5,928,880 (Wilding et al) discloses mesoscale sample preparation devices capable of providing microvolume test samples, separated into a cell-enriched fraction and a fraction of reduced cell content, for performing various analyses, such as binding assays, determinations involving polynucleotide amplification and the like.
WO 99/61888 discloses microfabricated devices for sorting cells based on a desired characteristic.

Many high-throughput screening assay systems rely upon entirely in vitro models of biological systems. In many cases, these in vitro systems have proven to be effective models of the sample mixtures of interest, and have led to the identification of promising pharmaceutical drug candidate compounds. Cell based assays are often preferred for an initial screening of biologically active compounds, due to the cell's approximation of in vivo systems, combined with their capability to be rapidly screened. A variety of cell responses to stimuli can be detected, including cell death, transporter function and response to chemical stimuli. Flow cytometry is one of the most commonly used techniques for isolating cell populations of interest for a particular assay. Although widely used, flow cytometry suffers from some limitations including extensive set up time, complexity of controlling parameters (such as stream flow, drop delay time etc), use of extensive manpower time, and the inability to separate individual particles or components.

It would generally be desirable to provide microfluidic devices and methods of broad applicability for use in performing separation and post separation analyses of individual components of sample mixtures. The present invention meets these and other needs.

### SUMMARY OF THE INVENTION

The present invention provides methods for performing various separation and collection of components of chemical and biochemical mixtures as set out in the claims. In the methods of the invention, components of sample mixtures are separated and sorted by directing the separated components into designated receptacle or containers.

The methods of the present invention may employ systems with integrated components. These systems include material transport systems, computer control systems and robotic systems.

In one aspect, the invention provides methods for sorting cells by hydrodynamically flowing cells in a microchannel of a device and directing a desired cell into a reservoir on the device or optionally into a receptacle or container external to the device.

The systems used in the methods of the present invention optionally includes devices comprising channel networks coupled to fluid direction components for inducing fluidic flow within the channel networks. The fluid direction component includes one or more of a pressure force modulator, an electrokinetic force modulator, a capillary force modulator, a wicking element or the like. Additionally, a flow control regulator is also optionally provided as well as a computer for directing flow and separation of the components contained in fluidic sample mixtures. The systems of the invention also include sources of any sample mixtures as well as external storage containers for collecting sorted components.

### BRIEF DESCRIPTION OF THE DRAWINGS

Figure 1 schematically illustrates a microfluidic device including a capillary element from the top (panel A), side (panel B), and perspective views (panel C).

Figure 2 illustrates a channel layout for a microfluidic device that is particularly suited for performing sorting and collection methods of the present invention.

Figure 3 illustrates an overall system including a microfluidic device, a controller, a detector and sample sources.

Figure 4 illustrates a device used for sorting fluorescently labeled beads described in Example 1.

Figure 5 Panel A schematically illustrates the sorting of cells from a cell mixture using a device of the present invention. Panel B lists a table showing the pressure applied at the wells of the device during operation of the system

Figure 6 illustrates a simple layout for partitioning a microtiter plate for providing wells for storage of sample materials as well as wells for receiving sample components.

### DETAILED DESCRIPTION

### I. General

The present invention generally provides methods for performing the separation and collection of individual components of sample mixtures in a fast and efficient manner. Specifically, the present invention is directed to methods using microfluidic systems comprising microfluidic devices having one or more fluidic interfaces integral to the device wherein such fluidic interfaces may be used for multiple purposes, e.g., accessing materials stored external to the device and/or transferring components of a mixture or a sample mixture from the microfluidic device into an external location, e.g., a well on a microtiter plate, another microfluidic device, a secondary analytical instrument such as a gas chromatograph or mass spectrophotometer etc. A fluidic interface generally includes capillaries, pipettors, channels, electropipettors or the like. The basic structure of an integrated capillary element is described in detail in commonly owned U.S. Patent No. 5,779,868, and published International Patent Application No. 98/00705.

As used herein, sample mixtures include chemical and biochemical mixtures including, but not limited to, cells, cellular fractions, chemical compositions, agonists and antagonists of cell membrane receptors, cytokine receptors, chemokine receptors, interleukin receptors, immunoglobulin receptors and antibodies, the cadherein family, the integrin family, the selectin family, and the like, toxins and venoms, viral epitopes, hormones, intracellular receptors, enzymes, enzyme substrates, cofactors, drugs, lectins, sugars, nucleic acids, oligosaccharides, proteins, phospholipids and antibodies. Additionally, synthetic polymers such as heteropolymers in which a known drug is covalently bound to any of the above such as polyurethanes, polyesters, polycarbonates, polyurease, polyamides, and polyacetates are also included. Other polymers as would be apparent to one of skill in the art are also included.

In particular, the methods of the present invention provide advantages over conventional systems by isolating components of a mixture by controlling the flow of the mixture through a region of a microchannel within a device and further coordinating the output from a fluidic interface of the device with an external assembly such as a microtiter plate or any other suitable container in a manner such that individually isolated components of the mixture are collected in separate containers or optionally transferred to other instrumentation for further analysis. The controlled flow of the mixture is achieved by several factors such as density or concentration of the mixture, control of variables associated with the material transport system such as pressure differential, voltage differential etc, as well as the configuration of the microfluidic elements within the microfluidic device.

The methods of the present invention may also use a robotic station to position the microfluidic device such that the fluidic interface dispenses desired components of a mixture into separate collection wells or reservoirs.

A number of additional features are optionally included with the systems described herein for particular operations and manipulations, and these are generally described in greater detail below.

### II. Systems

In accordance with the methods claimed herein, integrated systems are provided for the isolation of desired components of a mixture and subsequent collection of the isolated components. The microfluidic systems include microfluidic devices integrated with control and transport modules as well as detection systems for detection of the end results of a reaction or analysis performed within the microfluidic device. The controlling and transport modules may optionally include robotic components for moving system modules relative to one another. Optionally, the robotic components may be used for positioning the microfluidic device relative to a receptacle, e.g., a well on a microtiter plate, a petri dish, an inlet port for an analytical instrument such as a mass spectrophotometer, Gas Chromatograph or the like. The microfluidic systems also include computer and software for controlling the various systems components.

The microfluidic device has a microchannel network which comprises at least a first reaction channel and at least one reservoir for the introduction of materials. The device also includes at least one fluidic interface such as a capillary element extending from the body structure of the device for dispensing isolated materials to a receptacle external to the device. The at least one fluidic interface can also introduce materials from sources external to the device into the device. Optionally, the device can also have a second fluid interface extending from the body structure for introducing materials into the device. Typically, the capillary element is an elongated body or capillary incorporating at least one capillary channel extending the length of the capillary element. One end of the capillary channel is opened while the opposing end of the channel is in fluid communication with at least one channel that is contained within a microfluidic device. In microfluidic devices known to date, the capillary element serves as a source for introducing reaction components into the microfluidic devices. Sampling of materials is generally carried out by placing the open end of the capillary channel into contact with a source of the material to be analyzed. The reaction channels, reservoirs and capillary elements are generally in fluidic communication, i.e., fluid can flow between the channels under selected conditions. The system has a material transport system integrated with the microfluidic device for controllably transporting a material through and among the channel network and into or out of the capillary elements. The material is then drawn into the capillary channel and transported into the channels by pressure based or electrokinetic flow. Specifically, pressure or vacuum driven forces are applied to draw materials into the channel networks of the device. Optionally, an electric field is established between the source of material, e.g. a reservoir within the device and some other point within the microfluidic device. The electric field then causes the electrokinetic movement of the material through the capillary element and into the microchannel network of the device. There are numerous applications for which the present invention is suited. Specifically, the microfluidic systems will be useful in methods for cell sorting, protein crystallization, fraction collection as well as for use with a mass spectrometer.

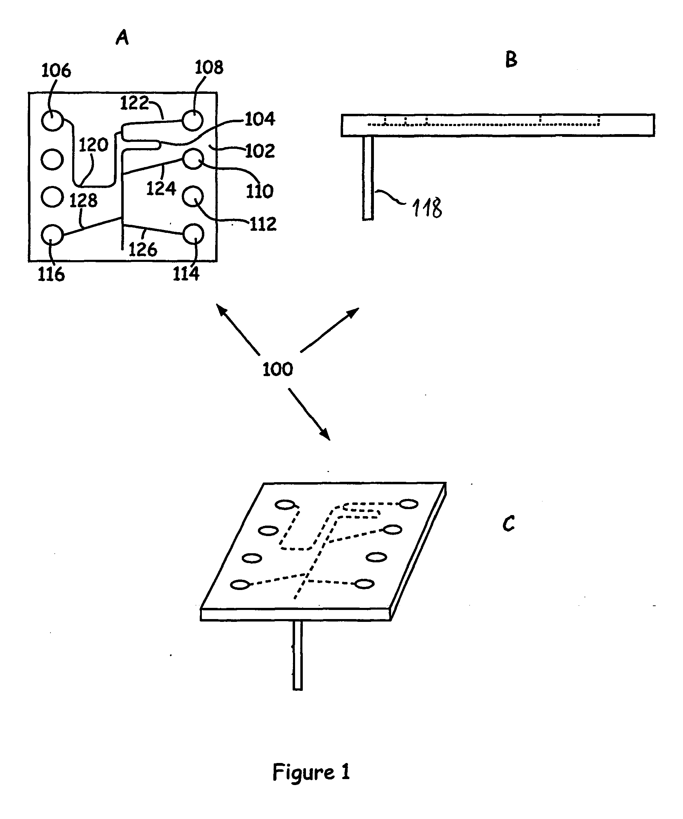

In accordance with the methods of the present invention, the devices comprise a reaction channel for performing a process to isolate desired components of a sample or biochemical mixture. The reaction channel typically comprises a region wherein the mixture is subjected to a first step of the process for isolating components. A source of sample mixture fluidly coupled to the reaction channel is provided and optionally includes a reservoir disposed within the device or a fluidic interface integral to the device. A schematic illustration of a simplified microfluidic device of the present invention is shown in Figure 1. As shown in panel A the microfluidic device 100 includes a planar body structure102, having disposed therein a main channel 104. The main channel is in fluid communication with wells 106,108, 110, 114 and 116 via side channels 120, 122, 124, 126, and 128 respectively. The device illustrated also includes a capillary element 118 that is attached to the finished structure.

Typically, the microfluidic devices are fabricated in a layered structure where a first planar substrate is manufactured to include one or more grooves etched, carved, embossed, molded, or otherwise manufactured into a planar surface of the substrate. These grooves typically define the layout of at least a portion of the interconnected channel network of a microfluidic device's body structure. A second substrate layer is then overlaid and bonded to the planar surface of the first substrate to enclose the grooves, and thereby seal and define the enclosed channels or conduits of the device.

In these devices, a sample mixture is introduced into the reaction channel by adding the reaction mixture into one of the reservoirs/wells that are in fluid communication with the reaction channel. As alluded to above, optionally a second fluidic interface such as a capillary element may be integrated with the body structure of the device to allow for accession to sample material that may be external to the body structure, e.g., a well in a multiwell plate, which is placed into fluid communication with the fluidic interface which is itself in fluid communication with the reaction channel. Fluidic interfaces used for sampling materials from external sources are described in detail in U.S. Patent No. 5,779,868.

As used herein, the term "microfluidic," or the term "microscale" when used to describe a fluidic element, such as a channel, reservoir or conduit, generally refers to one or more fluid passages, chambers or conduits which have at least one internal cross-sectional dimension, e.g., depth or width, of between about 0.1 µm and 500 µm. In the devices of the present invention, the microscale channels preferably have at least one cross-sectional dimension between about 0.1 µm and 200 µm, more preferably between about 0.1 µm and 100 µm, and often between about 0.1 µm and 20 µm. Accordingly, the microfluidic devices or systems typically include at least one microscale channel, and preferably at least two intersecting microscale channels disposed within a single body structure.

The body structure may comprise a single component, or an aggregation of separate parts, e.g., capillaries, joints, chambers, layers, etc., which when appropriately mated or joined together, form the microfluidic device of the invention, e.g., containing the channels and/or chambers described herein. Typically, the microfluidic devices described herein will comprise a top portion, a bottom portion, and an interior portion, wherein the interior portion substantially defines the channels and chambers of the device. In preferred aspects, the bottom portion will comprise a solid substrate that is substantially planar in structure, and which has at least one substantially flat upper surface. A variety of substrate materials may be employed as the bottom portion. Typically, because the devices are microfabricated, substrate materials will generally be selected based upon their compatibility with known microfabrication techniques, e.g., photolithography, wet chemical etching, laser ablation, air abrasion techniques, injection molding, embossing, and other techniques. The substrate materials are also generally selected for their compatibility with the full range of conditions to which the microfluidic devices may be exposed, including extremes of pH, temperature, salt concentration, and application of electric fields. Accordingly, in some preferred aspects, the substrate material may include materials normally associated with the semiconductor industry in which such microfabrication techniques are regularly employed, including, e.g., silica based substrates such as glass, quartz, silicon or polysilicon, as well as other substrate materials, such as gallium arsenide and the like. In the case of semiconductive materials, it will often be desirable to provide an insulating coating or layer, e.g., silicon oxide, over the substrate material, particularly where electric fields are to be applied.

In additional preferred aspects, the substrate materials will comprise polymeric materials, e.g., plastics, such as polymethylmethacrylate (PMMA), polycarbonate, polytetrafluoroethylene (TEFLON™), polyvinylchloride (PVC), polydimethylsiloxane (PDMS), polysulfone, and the like. Such substrates are readily manufactured from microfabricated masters, using well-known molding techniques, such as injection molding, embossing or stamping, or by polymerizing the polymeric precursor material within or against the mold or master. Such polymeric substrate materials are preferred for their ease of manufacture, low cost and disposability, as well as their general inertness to most extreme reaction conditions. Again, these polymeric materials may include treated surfaces, e.g., derivatized or coated surfaces, to enhance their utility in the microfluidic system, e.g., provide enhanced fluid direction, e.g., as described in U.S. Patent 5,885,470.

The channels and/or chambers of the microfluidic devices are typically fabricated into the upper surface of the substrate, or bottom portion, using the above described microfabrication techniques, as microscale grooves or indentations. The lower surface of the top portion of the microfluidic device, which top portion typically comprises a second planar substrate, is then overlaid upon and bonded to the surface of the bottom substrate, sealing the channels and/or chambers (the interior portion) of the device at the interface of these two components. Bonding of the top portion to the bottom portion may be carried out using a variety of known methods, depending upon the nature of the substrate material. For example, in the case of glass substrates, thermal bonding techniques may be used which employ elevated temperatures and pressure to bond the top portion of the device to the bottom portion. Polymeric substrates may be bonded using similar techniques, except that the temperatures used are generally lower to prevent excessive melting of the substrate material. Alternative methods may also be used to bond polymeric parts of the device together, including acoustic welding techniques, or the use of adhesives, e.g., UV curable adhesives, and the like.

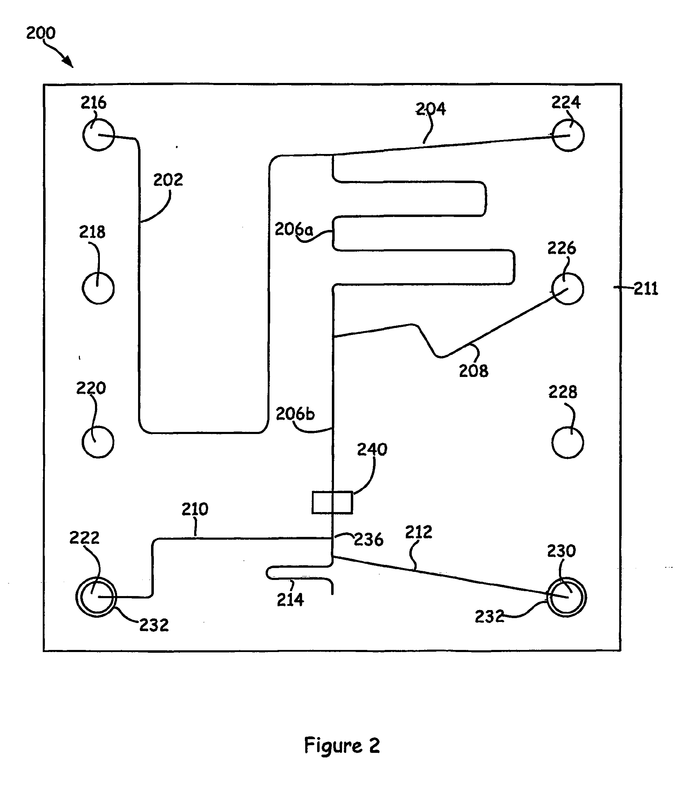

A preferred layout of devices of the present invention is shown in Figure 2. As shown, the device 200 includes a main body structure 211. Disposed within the main body structure is a channel network including channels 202, 204, 206, 208, 210 and 212. Channel 206 is a reaction channel and comprises a serpentine channel region and a detection window 240 for detecting a signal generated by materials flowing within the system. All the channels are in fluid communication. Capillary 214 is in fluid communication with channel 206 at a location downstream from the detection window 240. The materials detected with a desired activity are emitted or dispensed through capillary 214 for collection in a well on a microtiter plate or any other suitable receptacle.

Further, as shown reservoir 216 is in fluid communication with channel 202. A sample mixture is added to reservoir 216. Reservoir 224 is in fluid communication with channel 204. A first reactant is added to reservoir 224. During operation, motive forces are applied across the channel network to draw materials from reservoirs 216 and 224 such that a first reaction occurs within the serpentine region of channel 206. A third reservoir 226 is provided which is in fluid communication with channel 208. Optionally, flow from channel 208 is used to focus materials flowing in channel 206 such that individual components flow past the detection window 240. One or more additional reservoirs such as reservoirs 218, 220 and 228 may be provided within the integrated body structure 211 of the device. These additional reservoirs provide additional reagents that may be used in the analytical operation that is to be carried out.

As described above a flow controller is used to direct the flow of the various fluids into and through the channel networks of the device as well as for directing the flow of the isolated materials into the output fluidic interface of the device, detection systems for detecting desired components of mixtures and fractions, robotic stations for manipulating position of the output fluidic interface during the dispension of isolated components.

Flow controllers typically include one or more variable or constant pressure or vacuum source along with an interface for operably coupling the sources to the reservoirs. Such interfaces typically include ports with sealing gaskets, O-rings, insertion couplers, or the like, for providing a sealed connection between the pressure or vacuum source and the reservoir or port. The pressure or vacuum sources may apply a fixed or variable pressure, depending upon the particular operation that is to be performed. Fixed and variable pressure and vacuum sources are well known and include, e.g., peristaltic pumps, syringe pumps, diaphragm pumps, and the like. The pressure and/or vacuum sources are typically coupled to one or more different reservoirs on a device to control pressures at one or more reservoirs. Examples of multi-reservoir independent pressure controllers are described in, e.g., U.S. Patent No: 6,915,679. In addition to controlling the movement of sample materials into the reaction channel, the flow controller is also used for controlling the flow rate of the materials through a region of the reaction channel to allow the required time necessary for the characterization of the desired components of a reaction mixture. As described herein "characterization" includes without limitations, labeling components of a mixture, performing a reaction between the mixture and other reactants introduced into the reaction channel, or performing a separation of various components of the mixture using standard analytical techniques such as chromatographic, spectroscopic, and the like.

Further the systems also include instrument controllers such as electrically controlled robotic modules that motorize the movement of the microfluidic device and/or the external plate assembly to allow the proper dispension of isolated materials, components or particles from a mixture.

Robotic interfaces are described in detail in U.S. Patent No. 6,132,685.

In addition to control components, the systems also typically include detection systems for detecting the desired components or fractions of the sample mixture within the reaction channel, i.e. following the characterization process. Detection systems may be based upon a variety of well known detection methods, including light scattering, fluorescence spectroscopy (laser induced and non-laser methods), UV spectroscopy, electrochemical detection, thermal detection, capacitance based detection (see published PCT Application No. WO 99/39190), which can be readily configured to receive materials directly from capillary or microfluidic device outlets, and the like. In preferred aspects, optical detection methods, and particularly fluorescence based detection methods are used. Such detection systems generally include an excitation light source that provides light at an appropriate wavelength to excite the particular fluorescent species that is to be detected. The excitation light is then transmitted through an optical train, including lenses, filters (e.g., wavelength and/or spatial filters), beamsplitters, etc., and directed through, e.g., an objective lens, at a translucent portion of the reaction channel. As fluorescent species, components or fractions of the sample mixture pass through the excitation light they fluoresce. The fluorescent emissions are then collected and transmitted back through the objective lens and the same or an alternate optical train to a light sensor, e.g., a photodiode, photomultiplier tube, CCD or the like.

The systems also typically include a computer or microprocessor that is programmed to record the data received from the detectors and optionally to direct the movement of robotic modules for transporting plates and/or devices to facilitate the collection of isolated components, and further to analyze the data if necessary.

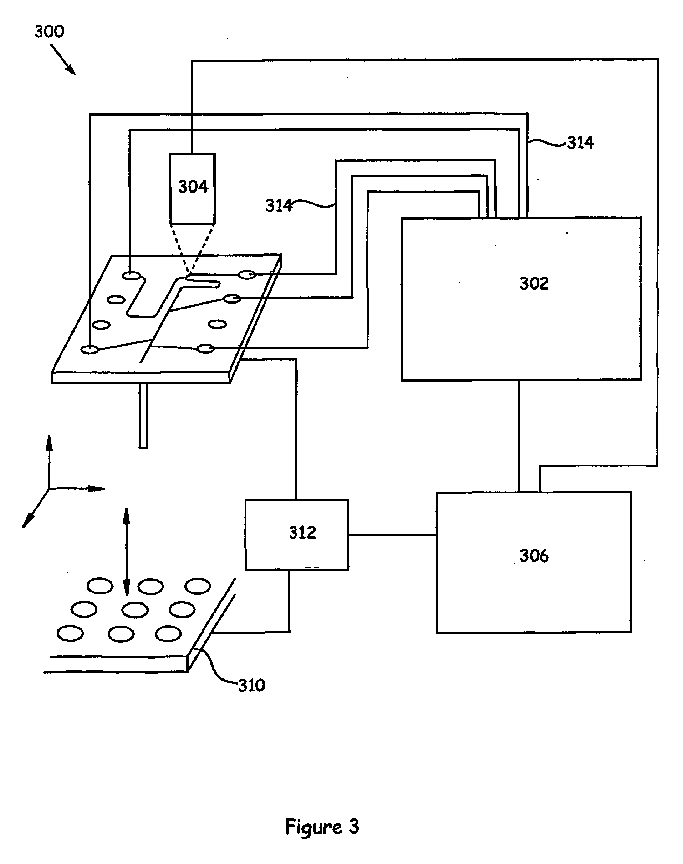

A schematic of an overall system, as described above, is shown in Figure 3. As shown the systems, includes a microfluidic device 300, as illustrated in Figure 2. The microfluidic device is typically coupled to a material transport system 302. This material transport system 302 applies appropriate motive forces to the materials within the channels of the device 300 to carry out a desired operation. In accordance with the preferred methods described herein, and with reference to Figure 3, the controller 302 generally includes a pressure and a vacuum source, as well as an electrical power supply. The pressure/vacuum source is typically coupled to the channels through which pressure induced flow is desired, e.g., 202, 204, 206, 208, 210, 212 and 214. Pressure or vacuum connections typically involve the use of a sealing pressure connection e.g., that employs a gasket or O-ring, to communicate pressure to a reservoir, which is schematically illustrated as connector 232. In general, these types of instrument/device interfaces are described in U.S. Patent No. 5,995,028 and 6,071,478. Pressure or vacuum sources are generally widely available and will vary depending upon the needs of a particular application. Typically, for microfluidic applications, positive displacement pumps, e.g., syringe pumps and the like, are employed as pressure or vacuum sources. A variety of pumps including peristaltic, diaphragm and other pumps are as readily employed. Optionally, the material transport system 302 may comprise an electrokinetic material flow system. In that case, the electrical power supply is coupled to the channels of the device through which electrokinetic flow is desired. Electrical coupling is generally carried out via electrodes that are connected to the power supply and dipped into the reservoirs connected to the channels in the device.

A detector 304 is typically employed in the overall system. The detector is typically placed within sensory communication of one or more channels of the device. As used herein, the phrase "within sensory communication" refers to positioning of a detector such that it is capable of receiving a detectable signal from the contents of a channel. In the case of optical signals, this only requires that the detector be positioned to receive optical signals from the material within a channel. This is generally accomplished by positioning an optical detector adjacent to a transparent or translucent portion of a channel segment such that it can receive the optical signal. Optical detectors are generally well known in the art and include fluorescence based detectors (intensity and polarization), spectrophotometric detectors, optical scattering detectors, impedance detectors and the like. In preferred embodiments at least two separate detectors may be employed for detecting different signals during operation of the system. In preferred aspects the methods and systems of the present invention utilize fluorescent detection systems. Typically, such systems utilize a light source capable of directing light energy at the separation channel or reaction channel as the separated components flow past the detection window. The light source typically produces light of an appropriate wavelength to activate the labeling group. Fluoresced light from the labeling group is then collected by appropriate optics, e.g., an objective lens, located adjacent to the channel, and the collected light is directed at a photometric detector, such as a photodiode or photo multiplier tube. The detector is typically coupled to a computer, which receives the data from the detector and transmits an appropriate command for maneuvering the flow of the separated components to the desired location. The measurement of fluorescent signals associated with single cells (or other particles) in microfluidic channels is difficult if the cells or particles are randomly disbursed in the channels. The channels are usually about 100 µm or larger in width to prevent clogging by particle aggregates; however, particles such as cells are typically on the order of 10 µm in diameter. Thus, an interrogating light beam is typically focused on a spot usually much less than the 100 µm width of the channel. As a result, it is useful, e.g., to center particles in the channel, to position particles to one side of a channel as described further below, or to otherwise focus flowing particles in a portion of a channel prior to detection to obtain accurate fluorescent readings.

In the method described above in reference to Figure 2, an argon ion laser is used to excite the cells through an epifluorescence detector. The detector is equipped with 520 nm and 680 nm band pass filters for two color detection. Generally, two color detection refers to a dual color labeling system for labeling the sample mixture and/or components contained in the mixture. Optionally, one of the labels may be activated upon the activation of a function of the cells contained in a cell suspension. Use of dual labeling systems for detecting cellular activity or response to a stimulus is described in detail in U.S. Patent No:6,529,835.

In addition to detector 304, controller 302 and device 308, an overall system typically includes a computer or microprocessor 306, which is operably coupled to the detector 304, the controller 302 and a sample delivery system 312. During operation the computer or microprocessor processes the signal from the detectors and sends the voltage signal to the pressure controller and the sample delivery system 312 when a signal satisfies a preset criterion. The sample delivery system 312 generally comprises a robotic x-y-z translation system and multiwell plate 310 handling equipment for delivering a sample material from a well to the fluidic interface of the microfluidic device and/or delivering a component from the fluidic interface to a well on the plate. Commercially available systems include, e.g., Carl Creative conveyor systems, as well as Twister systems available from Zymark Inc., Hopkinton, MA and robotic x-y-z translation arms, e.g., as available from Parker Positioning Systems, Inc, Fremont, CA.

The computer typically includes algorithms for feedback control to instruct the operation of the controller to direct fluid movement through the channels of the device 308 in accordance with user specified instructions. Additionally, computer 306 is also programmed to receive and record data from detector 304 and optionally direct sample delivery system 312 to move plate 310 and/or device 300 so that a fluidic interface, e.g., a capillary element can be immersed in a sample material, and access multiple different wells on a single plate or multiple plates, as needed.

### III. Hydrodynamic Flow Based Sorting

As stated above, in preferred aspects, the systems and methods of the present invention sort components of a sample mixtures using hydrodynamic flow of materials. The basic principle of sorting relies on a system being able to detect/differentiate the component type and then synchronize the flow pattern such that the desired components are directed to the output. Depending on the design of a given device and the specific application, the time delay between the detection of a signal and the onset of pressure pattern changes could vary. Generally speaking, one needs to allow some time for a desired component to flow down from the optical detection point to the intersection where the channel to a waste well and a channel to the output capillary intersect with the main reaction channel.

In operation and with reference again to Figure 2, a sample mixture is loaded into a reservoir 216 and flowed into a reaction channel region 206 of a device. A first reactant is loaded into a second reservoir 224 and also flowed through the reaction channel region 206. The flow of the materials is achieved by applying a pressure differential through the channels. The features and operation of the present instrument are readily illustrated with reference to the device shown in Figure 2 and described above. In one embodiment, the flow of the materials within a region of the reaction channel 206 is restricted or stopped for a short period to allow incubation of the mixture with the first reactant. The time period of restricted or stopped flow is from about 5 seconds to about 45 seconds. In preferred embodiments it is from about 10 seconds to about 30 seconds. After the incubation period, components of the sample mixture are hydrodynamically focused by a side channel pinching stream from a side reservoir 226 and are subsequently flowed past a detector 240 in order to detect components exhibiting a desired activity.

For example, in a method for distinguishing between live cells and dead cells, the cells are sorted based on differential permeability or binding to a fluorescent dye or dye conjugate, such as calcein AM, BCECF AM, ethidium bromide, propidium iodide, a cationic dye, a cationic membrane permeable dye, a neutral dye, a membrane permeable neutral dye, an anionic dye, an anionic membrane permeable dye. In other words, the live cells may bind to a particular dye while the dead cells may bind to a different dye. The cells are then sorted based on fluorescence detection and the differential binding of the living and dead cells. Another example of a desired activity is the level of calcium flux across the membrane of a cell. In this type of assay, the cells are sorted based on the effect of a composition or test agent on calcium flux across the membrane of a cell preloaded with a fluorescent calcium indicator. Based on the fluorescence detection, the level of calcium flux is measured and the cells exhibiting a level above a preset threshold value of acceptable calcium flux is isolated and collected.

Components without the desired activity are diverted to a waste reservoir 222. When a component exhibiting a desired activity is detected, the flow is directed away from waste reservoir 222 such that the detected component is diverted to flow into the capillary element 214. When the desired component is directed into the capillary element 214, the flow from a buffer reservoir 230 maintains a constant flow velocity down the reaction channel and out of the capillary element into a reservoir of a microtiter plate or any other receptacle, even after the flow from the reaction channel 206 is returned to the waste well. In other words, the flow of desired components continues in the direction of the capillary 214 even after the pressure controller switches flow to direct on coming components into the waste well 222. In preferred aspects, a single component is collected in an individual well of a microtiter plate by synchronizing the movement of XYZ robot stage supporting the microplate so that the capillary element is placed in a fresh well when a component is dispensed from the capillary and returned to a waste well between delivery of selected components. Typically, synchronization of movement involves a time delay from when a desired component of the mixture is detected to when the actual positioning of the capillary element into a new well is required. To illustrate the operation of the device, in one embodiment, the multiport pressure controller applies a positive pressure simultaneously at reservoirs 216, 224, 226, 222 and 230. In order to direct flow from reservoirs 216 and 224 into channel region 206a and downstream towards the detection window 240, a pressure gradient is maintained between reservoirs 216 and waste reservoir 222, reservoir 224 and waste reservoir 222, reservoir 226 and waste reservoir 222 and reservoir 230 and waste reservoir 222. When a desired component is detected at the detection window, the multiport pressure controller adjusts the pressure simultaneously at all the reservoirs indicated above whereby the pressure at reservoir 222 is offset by the pressure within channel 206b at junction 236, such that the flow of the desired component is switched to direct the component towards the capillary or fluid interface 214. After the desired component is directed past junction 236, the pressure at the reservoirs is again adjusted to continue the flow from the reservoirs into channel region 206a and 206b. Additionally, the pressure gradient between reservoir 230 and the fluid interface 214 is increased whereby the flow of fluid from reservoir 230 maintains a constant flow in the direction of the capillary without allowing any back flow into channel region 206b. In this manner, the mechanism of flowing fluidic materials into channel 206 from reservoirs 216 and 224 is decoupled from the dispensing mechanism of the separated component as they are being delivered into a well or receptacle via the capillary or fluid interface 214.

Generally a microtiter plate is used for receiving isolated or sorted components of a sample mixture. In preferred aspects, the first column of a microplate is used for the waste wells and the remaining wells are used to collect isolated components. As noted above, in preferred embodiments a device may comprise at least two fluidic interfaces i.e., capillaries for performing separate functions. For example, one capillary may be used to draw sample mixtures into the reaction channel from a source of sample mixtures, and a second capillary may be used for dispensing the sorted components out of the device and into a well on a microtiter plate. In preferred aspects, a single microtiter plate is used to provide waste wells for positioning the dispensing capillary during the standby mode, wells for adding sample mixtures and wells for collection of sorted components of the mixture. When a single microtiter plate is used as described, it is generally partitioned in a number of ways as described below.

### IV. Partitioning of a microtiter plate

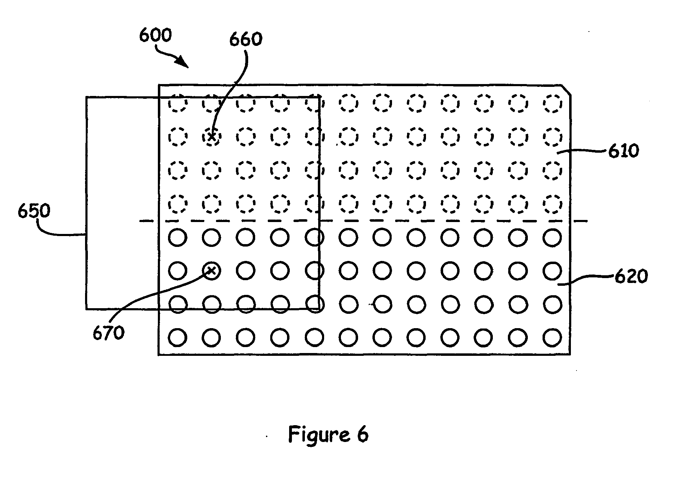

Figure 6 illustrates a simple layout for a microtiter plate (600) layout for use with devices as those described above i.e., devices having at least two capillaries for performing two separate functions. The top half 610 of the plate is used for storing sample mixtures while the lower half 620 is used for collecting components separated out of a sample mixture. The device 650 is shown positioned above the plate 600 such that a first capillary 660 is positioned in a well in the second row of top half 610 of the plate while a second capillary 670 is positioned in a well in the second row of bottom half 620 of the plate.

Although a single partitioning scheme is described above in reference to a microtiter plate, it will be appreciated by those of skill in the art that any number of partitioning schemes is possible. Partitioning schemes may be designed appropriately to accommodate various device dimensions, positions of capillaries within the dimensions of the device as well as the external plate assembly used for storing and collecting sample materials. Further, although the above layout is described with two capillaries, it will be appreciated that devices with more than 2 capillaries could also be used. In fact, any number of capillary elements or other suitable fluidic interfaces may be used.

### V. Preferred Embodiment

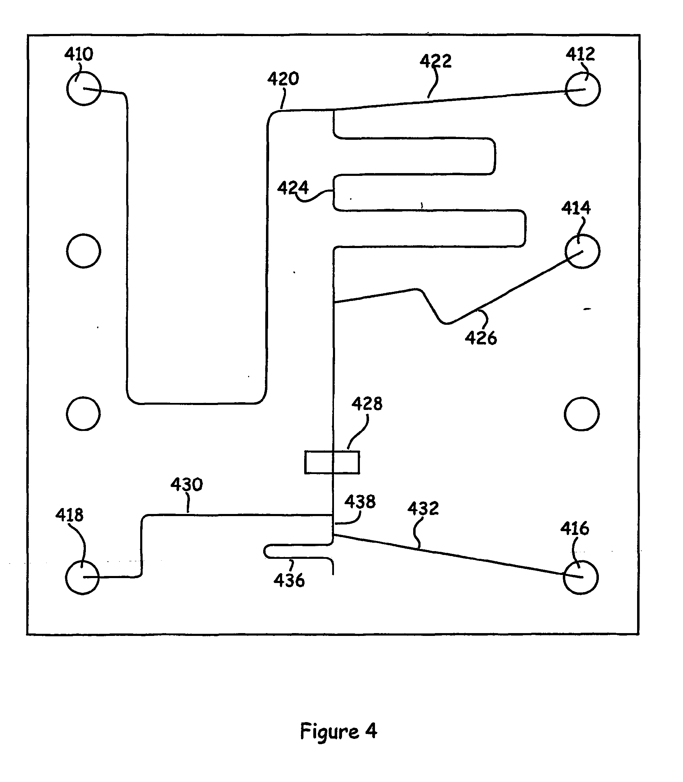

In a preferred aspect, the methods of the present invention employ devices for performing efficient and rapid cell sorting while minimizing space requirements as well as lowering cost and labor requirements. The device comprises a channel network in fluid communication with at least one capillary element extending out of the body structure of the device. Multiple wells or reservoirs are in fluid communication with the channel network. The channel network includes a main analysis channel and one or more side channels connecting the reservoirs to the main channel. Cells are added to a reservoir and are flowed through the side channel into the main channel by the application of pressure on several wells or reservoirs. Cells are reacted with a first reactant in the main channel. Detection of the cell reaction takes place at a region upstream in the main analysis channel such that desired cells are directed by the material transport system into the capillary element. A robotic station is used to transfer the microfluidic device such that every cell dispensed from the capillary element is deposited into a separate receptacle or well on a microtiter plate. A detection system detects and analyses the signal from the cell response so that the software for the system activates the robot to move the microfluidic device into a fresh well of a microplate to deposit the individual cell in the well at the appropriate time, based on the linear velocity of the cell in the microchannel. The flow of the cells is controlled by adjusting the density of the cells such that the cells flow by the detector and through the capillary individually and spaced in time Figure 4 illustrates an embodiment of the device.

In operation and with reference to Figure 4, a cell suspension is added into reservoir 410. A first reactant such as an agonist is added into reservoir 412. Buffer solution is added to wells 414 and 416. Multiport pressure control as described above, is used to hydrodynamically transport the cell suspension through channel 420 and into channel region 424, as well as to transport the first reactant from well 412 through channel 422 and into channel region 424. Hydrodynamic focusing of cells is described in detail in U.S. Patent No. 6,506,609.

The cells react with the first reactant in channel region 424. A laser activated fluorescent detection system located proximal to detection window 428 monitors the flowing cells as they flow past the detection window 428. When a cell with a desired activity is detected, the detector signal is transmitted to a computer and a feedback control algorithm directs the flow controller to flow the cell or cells into the spitter or fluid interface 436. The cells are controllably transported through channel region 438 and into the capillary element 436 for selective deposition into an external receptacle such as a well in a microtiter plate. "Controllably" transporting herein means the control of motive forces applied at the various wells for switching the flow from going in the direction of waste well 418 to channel region 438 and vice versa. Cells lacking the desired activity are directed through channel 430 and into well 418 by applying pressure to direct flow of buffer from well 416 to waste well 418. The flow from well 416 maintains a constant flow velocity through the channel region 438 and into the capillary 436. Single cells are collected in each well of a microplate by synchronizing the movement of a XYZ robot station supporting the microplate so that the sipper capillary is placed in a fresh well between emission of selected cells.

### EXAMPLES

### Example 1: Sorting of fluorescent latex beads

Fluorescent 6 µm beads (Spherotech Inc.) were used to characterize the efficiency of particle sorting using the devices of the present invention. The beads were suspended into cell buffer, Hank's balanced salt solution buffered with 20 mM Hepes pH 7.0 containing 13.8% (v/v) Optiprep (Nycomed). THP-1, pre-monocytic cells were labeled with 4 µM calcein-am (Molecular Probes Inc.) fluorescent dye and resuspended in cell buffer containing 18% v/v Optiprep at 2 x 10⁶ cells/mL. In this experiment the cells were analyzed for calcium flux. For this purpose, the cells were loaded with fluo-4 and fura red. The cell suspensions (40 µl) were placed into well 410 (See Figure 4) while cell buffer was loaded in wells 412, 414, and 416. An argon ion laser was used to excite the cells through an epifluorescence optical detection system, equipped with 520 nm and 680 nm band pass filters for two color detection. The detection signals were decoded and transformed into electrical signals using a microprocessor. The electrical signals were further transmitted to a pressure controller for manipulating the pressure applied at various wells so as to direct flow of cells with desired activity into the capillary element 436 for the collection of individual cells into separate wells on a microtiter plate. A xyz robotic station was used to position the microtiter plate relative to the microfluidic device to facilitate the collection of cells.

A mixture of non-fluorescent and fluorescein labeled beads (9:1) were manually counted after selection using on-chip cell sorting with the above described device. Only one bead was deposited per well resulting in increased enrichment of labeled cells. The efficiency of the microfluidic system for collecting sorted beads into individual wells was about 90%.

### Example 2: Multi-port pressure control for cell sorting

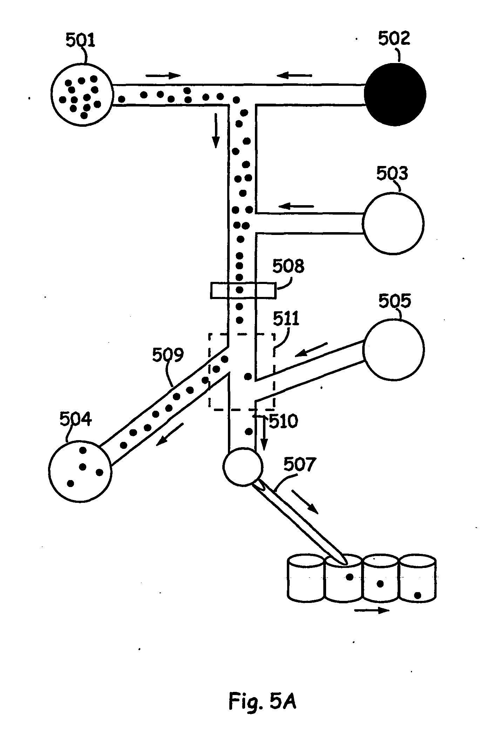

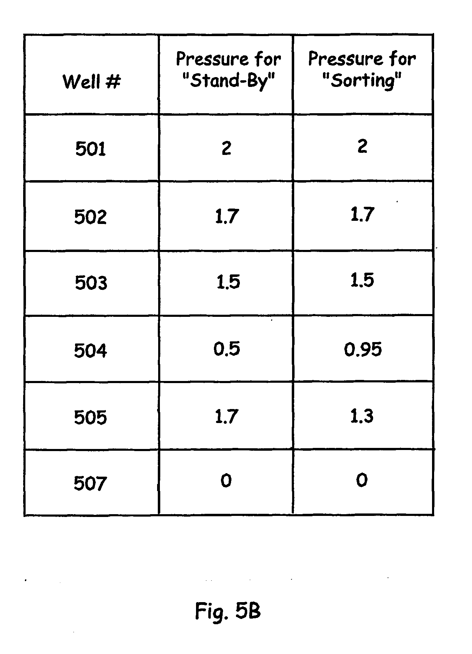

Figure 5 illustrates the flow control parameters for use of the systems during a cell sorting experiment.

A pressure controller was used to impose hydrodynamic flow on wells 501, 502, 503, 504 and 505. Eight independent pumps control the pressure with dynamic range of -5 to +5 psi. A micro-machined silicon thin film sensor with calibrated and temperature compensated output monitors the pressure on each well. A high precision electronic circuit was designed to regulate the output pressure. Pressure sensors located in the control module adjacent to each of eight pumps were used to establish a feedback loop with the pumps by measuring the pressure in tubing connecting the control module to the microfluidic device interface, i.e., the multiport cartridge. In this manner, a very high precision was maintained in the change of pressure at the various reservoirs of the microfluidic device.

A cell mixture was added to well # 501. An agonist was added to well # 502. A buffer solution was added to well # 503 and 505. The pressure was altered between "stand-by" modes and "sorting" modes in order to direct flow of the cells to either the waste well (well # 504) or to the fluidic interface 507. During the operation, pressure was applied to well # 503 to cause hydrodynamic pinching such that cells were focused to flow single file past the detection region. The default pressure control maintained the system in the "standby" mode. In the standby mode, the cells were directed to flow into the side channel 509 leading to the waste well # 504. A laser activated fluorescence detector was used to monitor the cells. When a cell with the desired activity was detected, the cells were separated or sorted by a voltage signal to the pressure controller to momentarily change the pressure applied at wells # 504 and 505 so as to cause the cells to flow into channel region 510 and into capillary element 507. Both the optical signal input and the pressure control in the multiport controller of the systems of the present invention have a time stamp feature and could be synchronized to within 10 msec. In this particular experiment, the threshold to trigger the flow control was set at an optical signal of 250 relative fluorescence unit. To account for the inherent ramp up time for the peristaltic pump, using 0 second delay allowed sufficient time for the cell to flow down to the switching intersection 511. Robotic controls integrated into the system enabled the collection of a single cell dispensed out of the capillary into individual wells of a microtiter plate.

Although the present invention has been described in some detail by way of illustration and example for purposes of clarity and understanding, it will be apparent that certain changes and modifications may be practice within the scope of the appended claims.

## Claims

1. A method for sorting components of a sample mixture having a desired activity, the method comprising:
providing a microfluidic device having a microscale channel network, wherein said channel network is in fluid communication with a plurality of reservoirs;
flowing a sample mixture from a reservoir of said plurality of reservoirs into a first microchannel within said microscale channel network;
flowing a first reactant from a reservoir of said plurality of reservoirs to mix with said sample mixture within said first microchannel;
detecting an interaction between said sample mixture and said first reactant;
isolating components of said sample mixture that exhibit said desired activity based on information received at the detector;
by directing said components in the flowing mixture from said first microchannel into a receptacle located external to the microfluidic device; and
diverting components of said sample mixture that do not exhibit said desired activity to a waste reservoir of said plurality of reservoirs.

2. The method of claim 1, wherein the sample mixture comprises a cellular suspension.

3. The method of claim 1, wherein the first reactant comprises an agonist.

4. The method of claim 2, wherein the cellular suspension comprises cells labeled with a fluorescent dye.

5. The method of claim 1, wherein flowing of said sample mixture and said first reactant comprises applying a pressure differential along the first microchannel to flow the sample mixture and the first reactant along the first microchannel.

6. The method of claim 5, wherein the pressure differential is applied by applying an elevated pressure at a first end of the first microchannel.

7. The method of claim 1, wherein flowing of said sample mixture and said first reactant comprises applying an electric field along said first microchannel, the electrical field being sufficient to cause electrokinetic flowing of said sample mixture and said first reactant.

8. The method of claim 2, wherein said cellular suspension comprises blood cells.

9. The method of claim 8, wherein said blood cells comprise one or more of B cells, T cells, monocytes or neutrophils.

10. The method of claim 1, wherein said sample mixture comprises a suspension of beads have cells adhered thereto.

11. The method of claim 2, wherein detecting an interaction of the sample mixture and said first reactant further comprises measuring a function of cells in the cellular suspension.

12. The method of claim 2, wherein detecting an interaction of the sample mixture and said first reactant further comprises measuring an effect of the first reactant on a function of the cells in the cellular suspension.

13. The method of claim 2, wherein the first reactant comprises a test compound.

14. The method of claim 2, wherein the cellular suspension comprises one or more of mammalian cells, insect cells, bacterial cells, fungal cells, yeast cells or plant cells.

15. The method of claim 2, wherein the cellular suspension comprises mammalian cells.

16. The method of claim 2, wherein the isolating step comprises hydrodynamically focusing cells in the cellular suspension to flow single file along a first side of said first microchannel.

17. The method of claim 16, wherein the hydrodynamically focusing of the cells comprises flowing a fluid from a second microchannel into said first microchannel.

18. The method of claim 1, wherein the detecting step comprises optically detecting an interaction between said sample mixture and said first reactant.

19. The method of claim 18, wherein said optically detecting comprises fluorescence detection.

20. The method of claim 1, wherein said receptacle is one or more of a well on a microtiter plate, a petri dish, a reservoir on the microfluidic device or a container.

21. The method of claim 1, further comprising providing a processor which is operably coupled to a detector for performing the detection step and to a fluid direction system for controlling movement of components having the desired activity into the receptacle, based on information received from said detector.

22. The method of claim 21, wherein said processor includes a computer which includes appropriate programming for receiving a signal from the detector that is indicative of the desired activity, and for directing the fluid direction system to direct components having the desired activity from the first microchannel into the receptacle.

23. The method of claim 2, wherein the desired activity is selected from one based on differential permeability or binding of one or more cells in the cellular suspension to a fluorescent dye or dye conjugate.

24. The method of claim 23, wherein the fluorescent dye or dye conjugate is calcein AM, BCECF AM, ethidium bromide, propidium iodide, a cationic dye, a cationic membrane permeable dye, a neutral dye, a membrane permeable neutral dye, an anionic dye or an anionic membrane permeable dye.

25. The method of claim 2, wherein the desired activity is the level of calcium flux across the membrane of one or more cells in the cellular suspension.

## Patentansprüche

1. Verfahren zum Trennen von Komponenten eines Probegemischs mit einer gewünschten Aktivität, wobei das Verfahren Folgendes umfasst:
das Bereitstellen einer Mikrofluidvorrichtung mit einem Netzwerk an Kanälen im Mikromaßstab, worin das Kanalnetzwerk in Fluidkommunikation mit einer Vielzahl an Vorratsbehältern steht;
das Einleiten eines Probegemischs aus einem Vorratsbehälter von der Vielzahl an Vorratsbehältern in einen ersten Mikrokanal in dem Kanalnetzwerk im Mikromaßstab;
das Einleiten eines ersten Reaktanten aus einem Vorratsbehälter von der Vielzahl an Vorratsbehältern, um diesen mit dem Probegemisch in dem ersten Mikrokanal zu vermischen;
das Detektieren einer Wechselwirkung zwischen dem Probegemisch und dem ersten Reaktanten;
das Isolieren von Komponenten des Probegemischs, die basierend auf den aus dem Detektor erhaltenen Informationen die gewünschte Aktivität aufweisen, indem die Komponenten in dem fließenden Gemisch aus dem ersten Mikrokanal in einen ersten außerhalb der Mikrofluidvorrichtung angeordneten Behälter geleitet werden;
das Ableiten von Komponenten des Probegemischs, die die gewünschte Aktivität nicht aufweisen, in einen Abfallvorratsbehälter von der Vielzahl an Vorratsbehältern.

2. Verfahren nach Anspruch 1, worin das Probegemisch eine Zellsuspension umfasst.

3. Verfahren nach Anspruch 1, worin der erste Reaktant einen Agonisten umfasst.

4. Verfahren nach Anspruch 2, worin die Zellsuspension mit einem fluoreszierenden Farbstoff markierte Zellen umfasst.

5. Verfahren nach Anspruch 1, worin das Einleiten des Probegemischs und des ersten Reaktanten das Anlegen einer Druckdifferenz entlang des ersten Mikrokanals umfasst, um das Probegemisch und den ersten Reaktanten entlang des ersten Mikrokanals fließen zu lassen.

6. Verfahren nach Anspruch 5, worin die Druckdifferenz durch das Anlegen eines erhöhten Drucks an einem ersten Ende des ersten Mikrokanals angelegt wird.

7. Verfahren nach Anspruch 1, worin das Einleiten des Probegemischs und des ersten Reaktanten das Anlegen eines elektrischen Felds entlang des ersten Mikrokanals umfasst, wobei das elektrische Feld ausreicht, um eine elektrokinetische Strömung des Probegemischs und des ersten Reaktanten zu bewirken.

8. Verfahren nach Anspruch 2, worin die Zellsuspension Blutzellen umfasst.

9. Verfahren nach Anspruch 8, worin die Blutzellen einen oder mehrere der folgenden Zelltypen umfassen: B-Zellen, T-Zellen, Monozyten oder Neutrophile.

10. Verfahren nach Anspruch 1, worin das Probegemisch eine Suspension von Perlen mit daran haftenden Zellen ist.

11. Verfahren nach Anspruch 2, worin das Detektieren einer Wechselwirkung des Probegemischs und des ersten Reaktanten ferner das Messen einer Funktion von Zellen in der Zellsuspension umfasst.

12. Verfahren nach Anspruch 2, worin das Detektieren einer Wechselwirkung des Probegemischs und des ersten Reaktanten ferner das Messen einer Wirkung des ersten Reaktanten auf eine Funktion der Zellen in der Zellsuspension umfasst.

13. Verfahren nach Anspruch 2, worin der erste Reaktant eine Testverbindung umfasst.

14. Verfahren nach Anspruch 2, worin die Zellsuspension einen oder mehrere der folgenden Zelltypen umfasst: Säugetierzellen, Insektenzellen, Bakterienzellen, Pilzzellen, Hefezellen oder Pflanzenzellen.

15. Verfahren nach Anspruch 2, worin die Zellsuspension Säugetierzellen umfasst.

16. Verfahren nach Anspruch 2, worin der Schritt des Isolierens das hydrodynamische Fokussieren von Zellen in der Zellsuspension umfasst, damit die Zellen hintereinander entlang einer ersten Seite des ersten Mikrokanals strömen.

17. Verfahren nach Anspruch 16, worin das hydrodynamische Fokussieren der Zellen umfasst, dass ein Fluid aus einem zweiten Mikrokanal in den ersten Mikrokanal geleitet wird.

18. Verfahren nach Anspruch 1, worin der Schritt des Detektierens die optische Detektion einer Wechselwirkung zwischen dem Probegemisch und dem ersten Reaktanten umfasst.

19. Verfahren nach Anspruch 18, worin das optische Detektieren die Detektion von Fluoreszenz umfasst.

20. Verfahren nach Anspruch 1, worin der Behälter einer oder mehrere der folgenden Behälter ist: ein Well auf einer Mikrotiterplatte, eine Petrischale, ein Vorratsbehälter auf der Mikrofluidvorrichtung oder ein Gefäß.

21. Verfahren nach Anspruch 1, ferner umfassend die Bereitstellung eines Prozessors, der operabel mit einem Detektor, der den Detektionsschritt durchführt, und einem Fluidleitsystem zur auf den von dem Detektor empfangenen Informationen basierenden Steuerung der Bewegung von Komponenten mit der gewünschten Aktivität in den Behälter verbunden ist.

22. Verfahren nach Anspruch 21, worin der Prozessor einen Computer umfasst, der eine geeignete Programmierung umfasst, um ein Signal von dem Detektor zu empfangen, das die gewünschte Aktivität anzeigt, und um das Fluidleitsystem so zu steuern, dass Komponenten mit der gewünschten Aktivität aus dem ersten Mikrokanal in den Behälter geleitet werden.

23. Verfahren nach Anspruch 2, worin die gewünschte Aktivität aus einer Aktivität, die auf differentieller Permeabilität beruht, oder der Bindung einer oder mehrerer Zellen in der Zellsuspension an einen fluoreszierenden Farbstoff oder ein fluoreszierendes Farbstoffkonjugat ausgewählt ist.

24. Verfahren nach Anspruch 23, worin der fluoreszierende Farbstoff oder das fluoreszierende Farbstoffkonjugat Calcein AM, BCEF AM, Ethidiumbromid, Propidiumiodid, ein kationischer Farbstoff, ein kationischer membrandurchlässiger Farbstoff, ein neutraler Farbstoff, ein membrandurchlässiger neutraler Farbstoff, ein anionischer Farbstoff oder ein anionischer membrandurchlässiger Farbstoff ist.

25. Verfahren nach Anspruch 2, worin die gewünschte Aktivität das Ausmaß des Calciumstroms durch die Membran einer oder mehrerer Zellen in der Zellsuspension ist.

## Revendications

1. Procédé pour séparer des composants d'un mélange d'échantillon ayant une activité recherchée, le procédé comprenant:
réaliser un dispositif microfluidique ayant un réseau de canaux à échelle microscopique, où ledit réseau de canaux est en communication fluidique avec plusieurs réservoirs;
faire couler un mélange d'échantillon d'un réservoir de ladite pluralité de réservoirs dans un premier microcanal dans ledit réseau de canaux à l'échelle microscopique;
faire couler un premier réactif d'un réservoir de ladite pluralité de réservoirs, pour se mélanger avec ledit mélange d'échantillon dans ledit premier microcanal;
détecter une interaction entre ledit mélange d'échantillon et ledit premier réactif;
isoler les composants dudit mélange d'échantillon qui présentent ladite activité recherchée sur la base des informations reçues au détecteur;
en dirigeant lesdits composants dans le mélange en écoulement dudit premier microcanal dans un récipient situé à l'extérieur du dispositif microfluidique; et
dévier les composants dudit mélange d'échantillon qui ne présentent pas ladite activité recherchée vers un réservoir de déchets.

2. Procédé selon la revendication 1, dans lequel ledit mélange d'échantillon comprend une suspension cellulaire.

3. Procédé selon la revendication 1, dans lequel le premier réactif comprend un agoniste.

4. Procédé selon la revendication 2, dans lequel la suspension cellulaire comprend des cellules marquées avec un colorant fluorescent.

5. Procédé selon la revendication 1, dans lequel l'écoulement dudit mélange d'échantillon et dudit premier réactif comprend l'application différentielle d'une pression le long du premier microcanal pour faire couler le mélange d'échantillon et le premier réactif le long du premier microcanal.

6. Procédé selon la revendication 5, dans lequel le différentiel de pression est appliqué en appliquant une pression élevée à une première extrémité dudit premier microcanal.

7. Procédé selon la revendication 1, dans lequel l'écoulement dudit mélange d'échantillon et dudit premier réactif comprend l'application d'un champ électrique le long dudit premier microcanal, le champ électrique étant suffisant pour provoquer un écoulement électrocinétique dudit mélange d'échantillon et dudit premier réactif.

8. Procédé selon la revendication 2, dans lequel ladite suspension cellulaire comprend des cellules sanguines.

9. Procédé selon la revendication 8, dans lequel lesdites cellules sanguines comprennent une ou plusieurs de cellules B, cellules T, monocytes ou neutrophiles.

10. Procédé selon la revendication 1, dans lequel ledit mélange d'échantillon comprend une suspension de perles auxquelles adhérent des cellules.

11. Procédé selon la revendication 2, dans lequel la détection d'une interaction du mélange d'échantillon et dudit premier réactif comprend en outre la mesure d'une fonction des cellules dans la suspension cellulaire.

12. Procédé selon la revendication 2, dans lequel la détection d'une interaction du mélange d'échantillon et dudit premier réactif comprend en outre la mesure d'un effet du premier réactif sur une fonction de cellules dans la suspension cellulaire.

13. Procédé selon la revendication 2, dans lequel le premier réactif comprend un composé test.

14. Procédé selon la revendication 2, dans lequel la suspension cellulaire comprend une ou plusieurs de cellules mammaliennes, cellules d'insectes, cellules bactériennes, cellules fongiques, cellules de levure ou cellules de plantes.

15. Procédé selon la revendication 2, dans lequel la suspension cellulaire comprend des cellules mammaliennes.

16. Procédé selon la revendication 2, dans lequel l'étape d'isolation comprend la focalisation hydrodynamique de cellules dans la suspension cellulaire pour l'écoulement d'une file unique le long d'un premier côté dudit premier microcanal.

17. Procédé selon la revendication 16, dans lequel la focalisation hydrodynamique des cellules comprend l'écoulement d'un fluide d'un deuxième microcanal dans ledit premier microcanal.

18. Procédé selon la revendication 1, dans lequel l'étape de détection comprend la détection optique d'une interaction entre ledit mélange d'échantillon et ledit premier réactif.

19. Procédé selon la revendication 18, dans lequel ladite détection optique comprend la détection de fluorescence.

20. Procédé selon la revendication 1, dans lequel ledit récipient est un ou plusieurs d'un puits sur une plaque de microtitrage, une boîte de Petri, un réservoir sur le dispositif microfluidique ou un contenant.

21. Procédé selon la revendication 1, comprenant en outre la réalisation d'un processeur qui est fonctionnellement couplé à un détecteur pour exécuter l'étape de détection et à un système de direction de fluide pour commander le mouvement de composants ayant l'activité recherchée dans le récipient sur la base des informations reçues dudit détecteur.

22. Procédé selon la revendication 21, dans lequel ledit processeur comprend un ordinateur qui comporte une programmation appropriée pour recevoir un signal du détecteur qui est indicatif de l'activité souhaitée, et pour diriger le système de direction de fluide afin de diriger des composants ayant l'activité recherchée du premier microcanal dans le récipient.

23. Procédé selon la revendication 2, dans lequel l'activité souhaitée est sélectionnée parmi une basée sur une perméabilité différentielle ou une liaison d'une ou de plusieurs cellules dans la suspension cellulaire à un colorant fluorescent ou un conjugué de colorants.

24. Procédé selon la revendication 23, dans lequel le colorant fluorescent ou le conjugué de colorants est calcéine AM, BCECF AM, éthidium bromure, propidium iodure, un colorant cationique, un colorant cationique à membrane perméable, un colorant neutre, un colorant neutre à membrane perméable, un colorant anionique ou un colorant anionique à membrane perméable.

25. Procédé selon la revendication 2, dans lequel l'activité souhaitée est le niveau du flux de calcium sur la membrane d'une ou de plusieurs cellules dans la suspension cellulaire.
